# EUROPEAN PATENT APPLICATION

(11) **EP 4 471 948 A1**
(43) Date of publication of application: **04.12.2024**
(21) Application number: 24173536.4
(22) Date of filing: 30.04.2024
(51) Int. Cl.: H01M 50/176, H01M 50/533, H01M 50/534, H01M 50/536, H01M 50/566, H01M 50/562, H01M 50/55, H01M 50/103, H01M 50/553, H01M 50/538

(54) **ELECTRICAL ENERGY STORAGE DEVICE AND MANUFACTURING METHOD FOR THE SAME**

(30) Priority: 30.05.2023 JP 2023088951
(71) Applicant: Prime Planet Energy & Solutions, Inc., Chuo-ku Tokyo 103-0022 (JP)
(72) Inventor: HARA, Yuki, Tokyo, 103-0022 (JP); SAITO, Yasuyuki, Tokyo, 103-0022 (JP); YAMAGUCHI, Hidehiko, Tokyo, 103-0022 (JP)
(74) Representative: Kuhnen & Wacker Patent- und Rechtsanwaltsbüro PartG mbB

(57) **Abstract**

An electrical energy storage device (100) disclosed herein includes a current collecting part (50) including a penetration hole (51h), a terminal (30) including a shaft part (30a) inserted to a terminal extraction hole (18) of a case main body (12) and the penetration hole (51h) and a caulking part (30c) caulked to a periphery of the penetration hole (51h), a step part (51g) that is provided at a side surface of the penetration hole (51h) of the current collecting part (50) and has at least a part of the caulking part (30c) of the terminal (30) disposed therein, and a welding bonding part (J) between a peripheral part of the penetration hole (51h) of the current collecting part (50) and the caulking part (30c) of the terminal (30), in which a space (S) is provided between the current collecting part (50) and the terminal (30) in a vicinity of the welding bonding part (J).

## Description

### BACKGROUND OF THE DISCLOSURE

### 1. Field

The present disclosure relates to an electrical energy storage device, and a manufacturing method for the same.

### 2. Background

One known structure of an electrical energy storage device such as a lithium ion battery includes an electrode body that includes an electrode, a case main body that includes an opening and accommodates the electrode body, a sealing plate that includes a terminal extraction hole and seals the opening of the case main body, a current collecting part that includes a penetration hole and is electrically connected to the electrode, and a terminal that is inserted to the terminal extraction hole and the penetration hole and is electrically connected to the electrode through the current collecting part. In one example of the conventional art regarding the electrical connection between a terminal and a current collecting part as disclosed in Japanese Patent Application Publication No. 2020-136105, a counterbore hole is provided around a penetration hole of the current collecting part, the terminal is caulked inside the counterbore hole, and the caulked part is bonded by welding to an edge part of the counterbore hole. According to Japanese Patent Application Publication No. 2020-136105, caulking the terminal in the counterbore hole causes the caulked terminal to deform so as to be in contact with a bottom surface and a side surface of the counterbore hole, making it difficult to form a gap between the current collecting part and the caulking part of the terminal. Thus, the caulking strength can be improved.

### SUMMARY

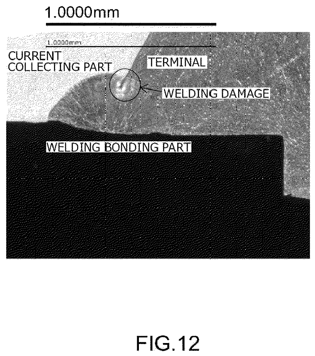

The present inventors' examination has proved newly that when the caulking part of the terminal and the current collecting part are in close contact with each other as described in, for example, Japanese Patent Application Publication No. 2020-136105, a welding defect easily occurs in a welding bonding part. That is to say, at the welding, due to swelling of air, volatilization of organic substances, and the like by welding heat, high-temperature gas (fume) may be generated. Here, if the terminal and the current collecting part are in close contact with each other, there is no way out for the generated gas and the gas may remain in the welding bonding part. As a result, although the caulking strength may be improved, a welding defect such as a blowhole (see FIG. 12) or a pit (opening damage) tends to occur in the welding bonding part. Note that since the blowhole is an internal damage, it is very difficult to detect this damage with eyes. The occurrence of the welding damage in the welding bonding part may result in unstable conductive connection or higher electric resistance.

The present disclosure has been made in view of the above circumstances, and an object is to provide an electrical energy storage device in which occurrence of a welding defect in a welding bonding part between a terminal and a current collecting part is suppressed, and a manufacturing method for the electrical energy storage device.

An electrical energy storage device according to the present disclosure includes: an electrode body including an electrode; a case main body that includes an opening and accommodates the electrode body; a sealing plate that includes a terminal extraction hole and seals the opening of the case main body; a current collecting part that is electrically connected to the electrode inside the case main body and includes a penetration hole; a terminal that includes a shaft part inserted to the terminal extraction hole and the penetration hole and a caulking part provided at one end part of the shaft part on a side of the case main body and caulked to a periphery of the penetration hole; a step part that is provided at a side surface of the penetration hole of the current collecting part and has at least a part of the caulking part of the terminal disposed therein; and a welding bonding part between a peripheral part of the penetration hole of the current collecting part and the caulking part of the terminal, in which a space is provided between the current collecting part and the terminal in a vicinity of the welding bonding part.

In the above structure, the step part is provided at the side surface of the penetration hole of the current collecting part and at least a part of the caulking part is disposed in the step part. Thus, the caulking strength can be improved. In the above structure, the space is provided in the vicinity of the welding bonding part and the space is secured for gas to escape at the welding. Since the space is secured for gas to escape in this manner, the occurrence of a welding defect in the welding bonding part can be suppressed. Accordingly, the welding bonding part with low resistance can be formed stably and the conduction reliability can be improved.

Although there is no direct relation with the art disclosed herein, WO 2010/089852 discloses that an engagement part between an opening of a case main body and a sealing plate includes a groove part that communicates between the inside and the outside of the case main body.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electrical energy storage device according to an embodiment;
FIG. 2 is a schematic longitudinal cross-sectional view taken along line II-II in FIG. 1;
FIG. 3 is a perspective view schematically illustrating a united object of a sealing plate and an electrode body group;
FIG. 4 is a schematic view illustrating a structure of a winding electrode body;
FIG. 5 is a perspective view schematically illustrating a sealing plate assembly;
FIG. 6 is a perspective view of the sealing plate assembly in FIG. 5 that is turned over;
FIG. 7 is a cross-sectional view taken along line VII-VII in FIG. 5;
FIG. 8 is a partially enlarged cross-sectional view schematically illustrating a vicinity of a welding bonding part in FIG. 7;
FIG. 9 is an exploded view of FIG. 7, schematically illustrating each member before a caulking process;
FIG. 10 is a cross-sectional SEM image in a vicinity of a welding bonding part according to one example;
FIG. 11 is an X-ray CT image in the vicinity of the welding bonding part according to one example; and
FIG. 12 is a cross-sectional SEM image in the vicinity of a welding bonding part according to a conventional art.

### DETAILED DESCRIPTION OF THE PREFERRED EMBODIMENTS

Hereinafter, preferred embodiments of the art disclosed herein will be described with reference to the drawings. Meanwhile, matters that are other than matters particularly mentioned in the present specification and that are necessary for the implementation of the present disclosure (for example, the general configuration and manufacturing process of an electrical energy storage device that do not characterize the present disclosure) can be grasped as design matters of those skilled in the art based on the prior art in the relevant field. The present disclosure can be implemented on the basis of the contents disclosed in the present specification and common technical knowledge in the relevant field.

Note that the term "electrical energy storage device" in this specification refers to general devices that can be repeatedly charged and discharged as a result of the transfer of charge carriers between a positive electrode and a negative electrode through an electrolyte. The electrolyte may be any one of a liquid electrolyte (electrolyte solution), a gel electrolyte, and a solid electrolyte. The electrical energy storage device encompasses secondary batteries such as lithium ion secondary batteries and nickel-hydrogen batteries, and capacitors such as lithium ion capacitors and electrical double-layer capacitors. In the present specification, the notation "A to B" for a range signifies a value more than or equal to A and less than or equal to B, and is meant to encompass also the meaning of being "more than A (over A)" and "less than B (under B)".

### <Electrical energy storage device>

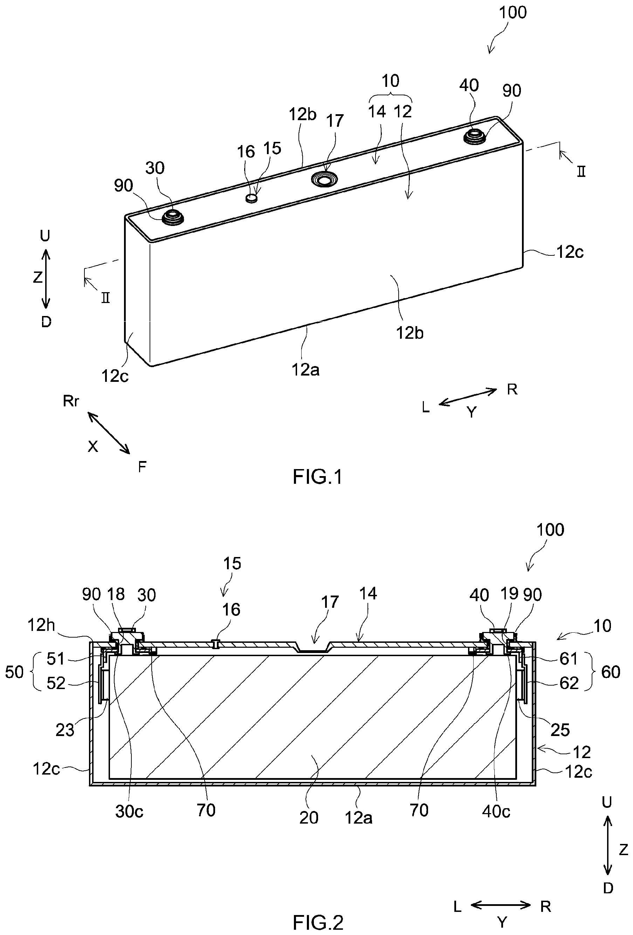

FIG. 1 is a perspective view of an electrical energy storage device 100. FIG. 2 is a schematic longitudinal cross-sectional view taken along line II-II in FIG. 1. In the following description, reference signs L, R, F, Rr, U, and D in the drawings respectively denote left, right, front, rear, up, and down, and reference signs X, Y, and Z in the drawings respectively denote a short side direction of the electrical energy storage device 100, a long side direction that is orthogonal to the short side direction, and an up-down direction that is orthogonal to the short side direction and the long side direction. However, these are merely directions for convenience of description and do not limit the mode of installation of the electrical energy storage device 100.

As illustrated in FIG. 2, the electrical energy storage device 100 includes a battery case 10, an electrode body group 20, a positive electrode terminal 30, a negative electrode terminal 40, a positive electrode current collecting part 50, and a negative electrode current collecting part 60. Although not illustrated in the drawing, the electrical energy storage device 100 further includes a nonaqueous electrolyte solution here. The electrical energy storage device 100 is configured in such a way that the electrode body group 20 and the nonaqueous electrolyte solution, which is not illustrated, are accommodated in the battery case 10. The electrical energy storage device 100 is a nonaqueous electrolyte solution secondary battery here, and more specifically, a lithium ion secondary battery.

The battery case 10 is a housing that accommodates the electrode body group 20 and the nonaqueous electrolyte solution. Here, the battery case 10 has an outer shape having a flat and bottomed rectangular parallelepiped shape (square shape). The material of the battery case 10 may be the same as a material that has been used conventionally, and is not particularly limited. The battery case 10 is preferably formed of a metal and is more preferably formed of, for example, aluminum, an aluminum alloy, iron, an iron alloy, or the like. As illustrated in FIG. 2, the battery case 10 includes a case main body 12 having an opening 12h, and a sealing plate (lid body) 14 that covers the opening 12h.

As illustrated in FIG. 1, the case main body 12 includes a bottom wall 12a with a substantially rectangular shape, a pair of long side walls 12b that extend from long sides of the bottom wall 12a and face each other, and a pair of short side walls 12c that extend from short sides of the bottom wall 12a and face each other. The area of the short side wall 12c is smaller than the area of the long side wall 12b. Inside the case main body 12, the electrode body group 20 and the nonaqueous electrolyte solution are accommodated. Note that in the present specification, the term "substantially rectangular shape" encompasses, in addition to a perfect rectangular shape (rectangle), for example, a shape whose corner connecting a long side and a short side of the rectangular shape is rounded, a shape whose corner includes a notch, and the like.

The sealing plate 14 is a plate-shaped member with predetermined thickness. The sealing plate 14 is attached to the case main body 12 so as to cover the opening 12h of the case main body 12. The sealing plate 14 faces the bottom wall 12a of the case main body 12. The sealing plate 14 has a substantially rectangular shape in a plan view. The battery case 10 is integrated by the sealing plate 14 being bonded (for example, bonded by welding) to a periphery of the opening 12h of the case main body 12. The battery case 10 is hermetically sealed (closed).

As illustrated in FIG. 2, the sealing plate 14 is provided with a liquid injection hole 15, a gas exhaust valve 17, and two terminal extraction holes 18 and 19. The liquid injection hole 15 is a hole for injecting the nonaqueous electrolyte solution into the battery case 10 after the sealing plate 14 is assembled to the case main body 12. The liquid injection hole 15 is sealed by a sealing member 16. The gas exhaust valve 17 is configured to fracture when pressure inside the battery case 10 reaches a predetermined value or more and discharge a gas in the battery case 10 to the outside. The terminal extraction holes 18 and 19 are formed in both end parts of the sealing plate 14 in the long side direction Y The terminal extraction holes 18 and 19 penetrate the sealing plate 14 in the up-down direction Z. The terminal extraction holes 18 and 19 have a cylindrical shape here. The terminal extraction holes 18 and 19 respectively have inner diameters that enable penetration of the positive electrode terminal 30 and the negative electrode terminal 40 before the electrode terminals are attached to the sealing plate 14 (before a caulking process). For example, the terminal extraction hole 18 is formed to be smaller than a shaft part 30a of the positive electrode terminal 30, which is described below, before the caulking process.

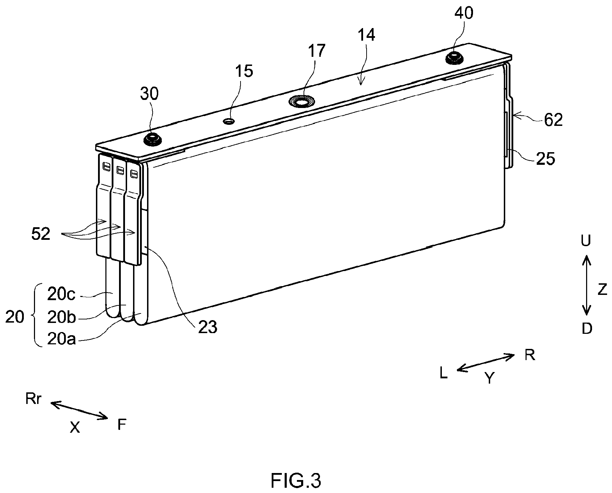

FIG. 3 is a perspective view schematically illustrating a united object of the sealing plate 14 (specifically, sealing plate assembly to be described below) and the electrode body group 20. Here, the electrode body group 20 includes three electrode bodies 20a, 20b, and 20c. However, the number of electrode bodies disposed inside one battery case 10 is not particularly limited, and may be one, or two or more (plural). The structure of each of the electrode bodies 20a, 20b, and 20c is not limited in particular and may be similar to the conventional one.

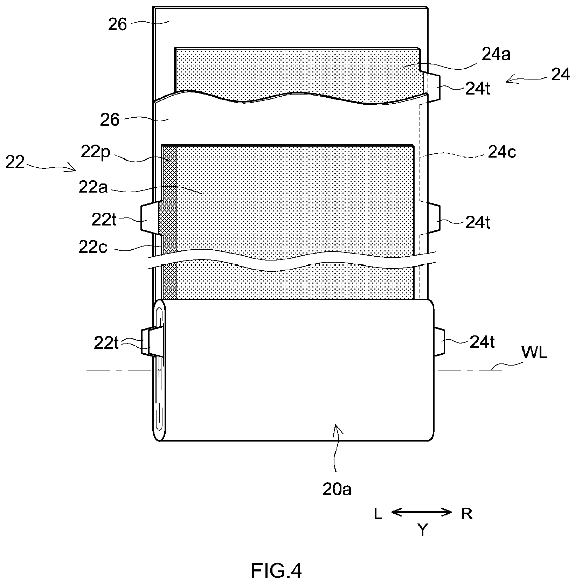

FIG. 4 is a schematic view illustrating a structure of the electrode body 20a. Although the electrode body 20a will be described below in detail as an example, the electrode bodies 20b and 20c can also be configured similarly. The electrode body 20a includes a positive electrode 22 and a negative electrode 24. The positive electrode 22 and/or the negative electrode 24 is one example of the electrode disclosed herein. Here, the electrode body 20a is a flat winding electrode body in which the positive electrode 22 with a band shape and the negative electrode 24 with a band shape are stacked through two separators 26 with a band shape and are wound using a winding axis WL as a center. However, each of the electrode bodies 20a, 20b, and 20c may be a laminated electrode body in which a positive electrode with a square shape (typically rectangular shape) and a negative electrode with a square shape (typically rectangular shape) are laminated on each other in an insulated state.

As can be understood from FIG. 2 and FIG. 4, the electrode body 20a is disposed inside the battery case 10 in a direction in which the winding axis WL is parallel to the long side direction Y In other words, the electrode body 20a is disposed inside the battery case 10 in a direction in which the winding axis WL is parallel to the bottom wall 12a and orthogonal to the short side wall 12c. The electrical energy storage device 100 has a so-called lateral tab structure in which a positive electrode tab group 23 and a negative electrode tab group 25 to be described below exist respectively on a left side and a right side of the electrode body group 20 as illustrated in FIG. 2. However, the electrical energy storage device 100 may have a so-called upper tab structure in which the positive electrode tab group 23 and the negative electrode tab group 25 exist respectively on an upper side and a lower side of the electrode body group 20.

As illustrated in FIG. 4, here, the positive electrode 22 includes a positive electrode current collector 22c, and a positive electrode active material layer 22a and a positive electrode protection layer 22p that are firmly fixed onto at least one surface of the positive electrode current collector 22c. However, the positive electrode protection layer 22p is not an essential component and can also be omitted in other embodiments. The positive electrode current collector 22c has a band shape. The positive electrode current collector 22c is formed of a conductive metal such as aluminum, an aluminum alloy, nickel, or stainless steel. Here, the positive electrode current collector 22c is a metal foil, specifically an aluminum foil.

A plurality of positive electrode tabs 22t are provided at one end part (the left end part in FIG. 4) of the positive electrode current collector 22c in the long side direction Y Each of the plurality of positive electrode tabs 22t has a convex shape protruding toward one side (the left side in FIG. 4) in the long side direction Y The plurality of positive electrode tabs 22t are provided at intervals (intermittently) in the longitudinal direction of the positive electrode 22. Here, the positive electrode tab 22t is a part of the positive electrode current collector 22c and is formed of a metal foil (aluminum foil). The positive electrode tab 22t is a part (current collector exposed part) of the positive electrode current collector 22c in which the positive electrode active material layer 22a and the positive electrode protection layer 22p are not formed. However, the positive electrode tab 22t may be a member separate from the positive electrode current collector 22c. As illustrated in FIG. 2, the plurality of positive electrode tabs 22t are stacked at one end part (the left end part in FIG. 4) in the long side direction Y and constitute the positive electrode tab group 23. The positive electrode tab group 23 is electrically connected to the positive electrode terminal 30 through the positive electrode current collecting part 50. A positive electrode second current collecting part 52 to be described below is attached to the positive electrode tab group 23.

As illustrated in FIG. 4, the positive electrode active material layer 22a is provided to have a band shape in the longitudinal direction of the positive electrode current collector 22c with a band shape. The positive electrode active material layer 22a contains a positive electrode active material (for example, a lithium transition metal complex oxide such as a lithium nickel cobalt manganese complex oxide) capable of reversibly storing and releasing charge carriers. The positive electrode active material layer 22a may additionally contain any component other than the positive electrode active material, for example, a conductive material, a binder, various additive components, or the like.

As illustrated in FIG. 4, the positive electrode protection layer 22p is provided at a boundary portion between the positive electrode current collector 22c and the positive electrode active material layer 22a in the long side direction Y Here, the positive electrode protection layer 22p is provided at one end part (the left end part in FIG. 4) of the positive electrode current collector 22c in the long side direction Y The positive electrode protection layer 22p is provided to have a band shape along the positive electrode active material layer 22a. The positive electrode protection layer 22p contains an inorganic filler (for example, alumina). The positive electrode protection layer 22p may additionally contain any component other than the inorganic filler, for example, a conductive material, a binder, various additive components, or the like.

As illustrated in FIG. 4, the negative electrode 24 includes a negative electrode current collector 24c and a negative electrode active material layer 24a that is firmly fixed onto at least one surface of the negative electrode current collector 24c here. The negative electrode current collector 24c has a band shape. The negative electrode current collector 24c is formed of a conductive metal such as copper, a copper alloy, nickel, or stainless steel. Here, the negative electrode current collector 24c is a metal foil, specifically a copper foil.

A plurality of negative electrode tabs 24t are provided at one end part (the right end part in FIG. 4) of the negative electrode current collector 24c in the long side direction Y Each of the plurality of negative electrode tabs 24t has a convex shape protruding toward one side (the right side in FIG. 4) in the long side direction Y The plurality of negative electrode tabs 24t are provided at intervals (intermittently) in the longitudinal direction of the negative electrode 24. Here, the negative electrode tab 24t is a part of the negative electrode current collector 24c and is formed of a metal foil (copper foil). The negative electrode tab 24t is a part (current collector exposed part) of the negative electrode current collector 24c in which the negative electrode active material layer 24a is not formed. However, the negative electrode tab 24t may be a member separate from the negative electrode current collector 24c. As illustrated in FIG. 2, the plurality of negative electrode tabs 24t are laminated at one end part (the right end part in FIG. 4) in the long side direction Y and constitute the negative electrode tab group 25. The negative electrode tab group 25 is electrically connected to the negative electrode terminal 40 through the negative electrode current collecting part 60. A negative electrode second current collecting part 62 to be described below is attached to the negative electrode tab group 25.

As illustrated in FIG. 4, the negative electrode active material layer 24a is provided to have a band shape in the longitudinal direction of the negative electrode current collector 24c with a band shape. The negative electrode active material layer 24a contains a negative electrode active material (for example, a carbon material such as graphite) capable of reversibly storing and releasing charge carriers. The negative electrode active material layer 24a may additionally contain any component other than the negative electrode active material, for example, a binder, a dispersant, various additive components, or the like.

The separator 26 is a member that insulates the positive electrode active material layer 22a of the positive electrode 22 and the negative electrode active material layer 24a of the negative electrode 24 from each other. As the separator 26, for example, a porous resin sheet formed of a polyolefin resin such as polyethylene (PE) or polypropylene (PP) is suitable. Meanwhile, a functional layer such as an adhesive layer containing a binder or a heat resistance layer (HRL) containing an inorganic filler may be provided on a surface of the separator 26.

The nonaqueous electrolyte solution may be similar to that in the related art and is not particularly limited. The nonaqueous electrolyte solution typically contains a nonaqueous solvent and a supporting salt. The nonaqueous solvent contains, for example, carbonates such as ethylene carbonate, dimethyl carbonate, and ethyl methyl carbonate. The supporting salt is, for example, a fluorine-containing lithium salt such as LiPF₆. In another embodiment, however, the electrical energy storage device 100 may include an aqueous electrolyte solution, a gel-state electrolyte, a solid-state electrolyte (solid electrolyte), or the like as the electrolyte instead of the nonaqueous electrolyte solution.

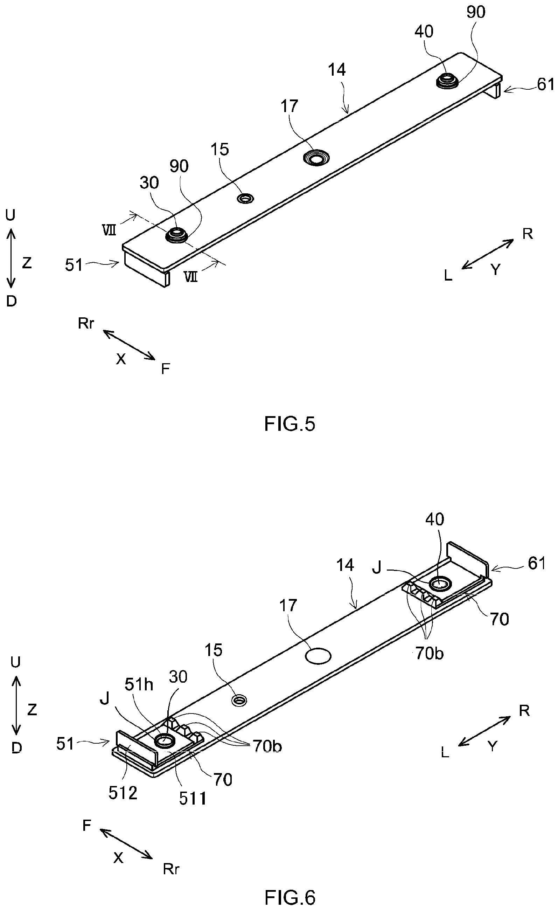

FIG. 5 is a perspective view schematically illustrating the sealing plate assembly. FIG. 6 is a perspective view in which the sealing plate assembly in FIG. 5 is turned over. FIG. 6 illustrates a surface (inner surface) of the sealing plate 14 on the side of the case main body 12. The sealing plate assembly is, here, a united object of the sealing plate 14, the positive electrode terminal 30, the negative electrode terminal 40, a positive electrode first current collecting part 51 of the positive electrode current collecting part 50, a negative electrode first current collecting part 61 of the negative electrode current collecting part 60, two resin members 70, and two gaskets 90. The positive electrode terminal 30, the gasket 90, the positive electrode first current collecting part 51 of the positive electrode current collecting part 50, and the resin member 70 are integrated with the sealing plate 14 in such a way that the positive electrode terminal 30 is caulked and bonded by welding to the positive electrode first current collecting part 51. Similarly, the negative electrode terminal 40, the gasket 90, the negative electrode first current collecting part 61 of the negative electrode current collecting part 60, and the resin member 70 are integrated with the sealing plate 14 in such a way that the negative electrode terminal 40 is caulked and bonded by welding to the negative electrode first current collecting part 61.

As illustrated in FIG. 5 and FIG. 6, each of the positive electrode terminal 30 and the negative electrode terminal 40 is attached to the sealing plate 14. The positive electrode terminal 30 is disposed on one side (on the left side in FIG. 5 and FIG. 6) of the sealing plate 14 in the long side direction Y The negative electrode terminal 40 is disposed on the other side (on the right side in FIG. 5 and FIG. 6) of the sealing plate 14 in the long side direction Y The positive electrode terminal 30 and/or the negative electrode terminal 40 is one example of the terminal disclosed herein. In particular, it is preferable that the positive electrode terminal 30 be the terminal disclosed herein. Although the positive electrode terminal 30 side is described as the example in detail below, the negative electrode terminal 40 side can also have the similar structure.

As illustrated in FIG. 2, the positive electrode terminal 30 is electrically connected to the positive electrode 22 (specifically, the positive electrode tab group 23) of each of the electrode bodies 20a, 20b, and 20c through the positive electrode current collecting part 50 inside the battery case 10. The positive electrode terminal 30 is electrically connected to the positive electrode first current collecting part 51 of the positive electrode current collecting part 50 by the caulking process (mechanical fastening) and welding bonding (metallurgical bonding). The positive electrode terminal 30 is preferably formed of a metal and is more preferably formed of, for example, aluminum or an aluminum alloy. According to the present inventors' examination, in the case where the positive electrode terminal 30 is formed of aluminum or an aluminum alloy, a welding damage tends to occur more frequently due to, for example, high fluidity of the metal or the like at the welding bonding. Therefore, it is particularly effective to apply the art disclosed herein.

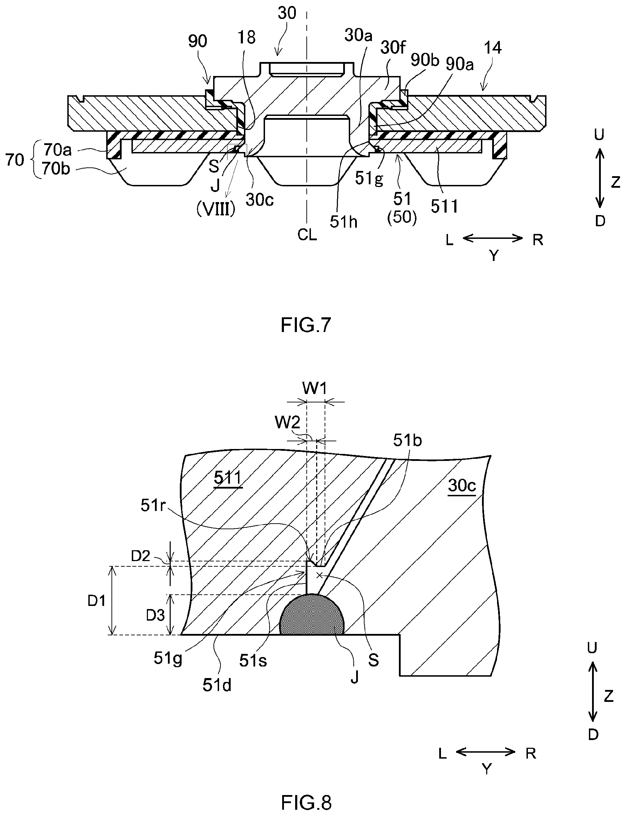

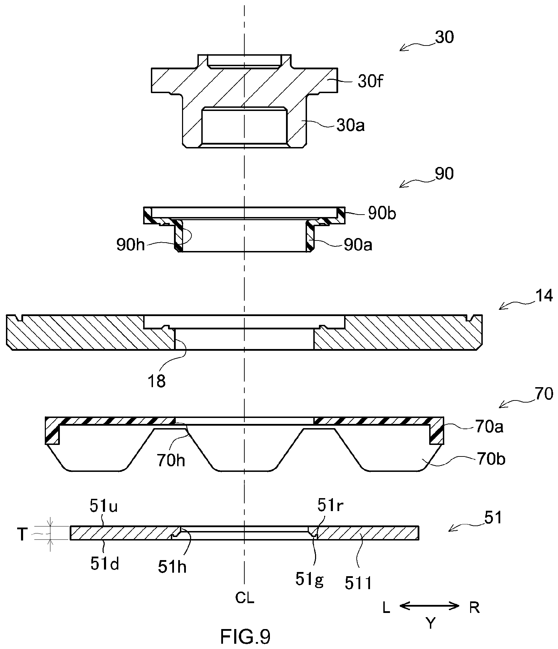

FIG. 7 is a cross-sectional view taken along line VII-VII in FIG. 5 and is a partially enlarged cross-sectional view schematically illustrating a vicinity of the positive electrode terminal 30. FIG. 8 is a partially enlarged cross-sectional view schematically illustrating a vicinity of a welding bonding part J in FIG. 7. FIG. 9 is an exploded view of FIG. 7, schematically illustrating each member before the caulking process. Note that in FIG. 7 and FIG. 9, a center axis CL of the positive electrode terminal 30 is expressed by a dash-dotted line. As illustrated in FIG. 7, the positive electrode terminal 30 extends from the inside to the outside of the sealing plate 14 through the terminal extraction hole 18 of the sealing plate 14. The positive electrode terminal 30 includes the shaft part 30a, a flange part 30f with the diameter increasing from an upper end part of the shaft part 30a, and a caulking part 30c provided at a lower end part of the shaft part 30a.

As illustrated in FIG. 7, the shaft part 30a extends in the up-down direction Z along the center axis CL. The shaft part 30a is inserted to the terminal extraction hole 18 of the sealing plate 14 and a penetration hole 51h (see FIG. 9) of the positive electrode first current collecting part 51 to be described below. The shaft part 30a has a cylindrical shape here. As illustrated in FIG. 9, before the caulking process, the lower end part of the shaft part 30a, that is, an end part on the side opposite to the side where the flange part 30f exists is hollow.

The flange part 30f is coupled to the upper end part of the shaft part 30a and extends upward as illustrated in FIG. 7. The flange part 30f has a larger outer shape than the shaft part 30a. The flange part 30f has a larger outer shape than the terminal extraction hole 18 of the sealing plate 14. The flange part 30f protrudes out of the battery case 10 through the terminal extraction hole 18 (specifically, to an outer surface of the sealing plate 14). The flange part 30f has a circular shape here in a plan view. The outer shape of the flange part 30f is an approximately cylindrical columnar shape here. An axis center of the flange part 30f coincides with an axis center of the shaft part 30a.

As illustrated in FIG. 7, the caulking part 30c is provided at the end part (lower end part in FIG. 7) of the shaft part 30a inside the battery case 10. The caulking part 30c is provided at a periphery of the terminal extraction hole 18 of the sealing plate 14. The caulking part 30c is a part resulting from the spread of the lower end part of the shaft part 30a by the caulking process when the positive electrode terminal 30 is attached to the sealing plate 14. The caulking part 30c is preferably provided axis-symmetrically about the center axis CL of the positive electrode terminal 30. Thus, for example, even if vibration, impact, or the like is applied in the use of the electrical energy storage device 100, the electrical connection between the positive electrode terminal 30 and the positive electrode current collecting part 50 can be maintained stably and the conduction reliability of the positive electrode terminal 30 can be improved. The caulking part 30c has a ring-like shape (for example, annular shape) here, and is provided along the entire periphery of the terminal extraction hole 18.

As illustrated in FIG. 7, the gasket 90 is an insulating member that is disposed between the sealing plate 14 and the positive electrode terminal 30. The gasket 90 has functions of insulating between the sealing plate 14 and the positive electrode terminal 30 and closing the terminal extraction hole 18 here. The gasket 90 has an electrical insulating property and is formed of a resin material capable of elastic deformation, for example fluororesin such as perfluoro alkoxy fluorine resin (PFA), polyphenylene sulfide resin (PPS), aliphatic polyamide, or the like. The gasket 90 includes a tubular part 90a and a base part 90b here.

The tubular part 90a is a part that prevents direct contact between the sealing plate 14 and the shaft part 30a of the positive electrode terminal 30. The tubular part 90a has a hollow cylindrical shape. The tubular part 90a includes a penetration hole 90h (see FIG. 9) penetrating in the up-down direction Z at a position corresponding to the terminal extraction hole 18 on the sealing plate 14. The penetration hole 90h has an inner diameter that enables penetration of the shaft part 30a of the positive electrode terminal 30 before the caulking process. The tubular part 90a is inserted to the terminal extraction hole 18 of the sealing plate 14. The base part 90b is a part that prevents direct contact between the sealing plate 14 and the flange part 30f of the positive electrode terminal 30. The base part 90b is coupled to an upper end of the tubular part 90a. The base part 90b is provided in an annular shape so as to surround the terminal extraction hole 18 of the sealing plate 14 here. The base part 90b is held between a lower surface of the flange part 30f of the positive electrode terminal 30 and the sealing plate 14, and compressed in the up-down direction Z by the caulking process.

The positive electrode current collecting part 50 constitutes a conductive path that electrically connects the positive electrode tab group 23 constituted by the plurality of positive electrode tabs 22t and the positive electrode terminal 30 as illustrated in FIG. 2. The positive electrode current collecting part 50 is an example of the current collecting part disclosed herein. The positive electrode current collecting part 50 may be formed of the same metal species as the positive electrode current collector 22c, for example, a conductive metal such as aluminum, an aluminum alloy, nickel, or stainless steel. The positive electrode current collecting part 50 is preferably formed of aluminum or an aluminum alloy. The present inventors' examination indicates that, in the case where the positive electrode current collecting part 50 is formed of aluminum or an aluminum alloy, for example, the welding damage tends to occur more frequently due to the high fluidity of the metal or the like at the welding bonding. Therefore, it is particularly effective to apply the art disclosed herein. The positive electrode current collecting part 50 includes the positive electrode first current collecting part 51 extending along the inner surface of the sealing plate 14 (see also FIG. 6) and the positive electrode second current collecting part 52 extending along the short side wall 12c of the case main body 12 (see also FIG. 3) here.

The positive electrode first current collecting part 51 is fixed to the sealing plate 14 by the caulking part 30c and the welding bonding part J as illustrated in FIG. 7. The positive electrode first current collecting part 51 has an approximately L-like shape as illustrated in FIG. 6. The positive electrode first current collecting part 51 may be configured by bending one member by, for example, a pressing process or the like, or may be configured by integrating a plurality of members by welding bonding or the like. The positive electrode first current collecting part 51 includes a first part 511 that spreads horizontally along the inner surface of the sealing plate 14, and a second part 512 that extends along the up-down direction Z from an end of the first part 511 on one side in the long side direction Y (the left end in FIG. 6).

As illustrated in FIG. 7, the first part 511 is a part that is electrically connected to the positive electrode terminal 30 by the caulking part 30c and the welding bonding part J. The first part 511 has a flat-plate shape having a thickness T (see FIG. 9). Although not limited in particular, the thickness T is typically 0.5 to 5 mm, for example 1 to 3 mm, and about 1.5 to 2 mm. In one example, the thickness T of the first part 511 is 1.5 mm. As illustrated in FIG. 9, the first part 511 includes an upper surface 51u and a lower surface 51d. The resin member 70 is disposed between the sealing plate 14 and the upper surface 5 1u of the first part 511. The first part 511 is insulated from the sealing plate 14 by the resin member 70. In the first part 511, the penetration hole 51h penetrating in the up-down direction Z is formed at a position corresponding to the terminal extraction hole 18 on the sealing plate 14.

As illustrated in FIG. 9, here, the penetration hole 51h is formed so that an upper end part is formed to have a cylindrical shape and a lower end part is formed to have an inverted tapered shape with the diameter increasing toward the lower surface 51d (in other words, the diameter increasing as being separated from the upper surface 51u). The taper angle is preferably 60° ±15° and more preferably 60° ±10°, for example. In another example, the penetration hole 51h may have the cylindrical shape entirely. To the penetration hole 51h, the positive electrode terminal 30 (specifically, shaft part 30a) is inserted as illustrated in FIG. 6. As illustrated in the magnified manner in FIG. 8, a step part 51g is provided in a part of a side surface of the penetration hole 51h.

The step part 51g is a part constricted from the side surface of the penetration hole 51h to the inside. The step part 51g is provided in a vicinity of an end part of the penetration hole 51h on the lower surface 51d side. By the provision of the step part 51g, the strength and the robustness of the caulking part 30c can be improved. The step part 51g is preferably formed axis-symmetrically about the center axis CL of the positive electrode terminal 30. Thus, for example, even if vibration, impact, or the like is applied in the use of the electrical energy storage device 100, the electrical connection between the positive electrode terminal 30 and the positive electrode current collecting part 50 can be maintained stably and the conduction reliability of the positive electrode terminal 30 can be improved. Although not illustrated, the step part 51g has an approximately cylindrical shape here.

As illustrated in FIG. 8, the step part 51g includes a bottom surface 51b and a side surface 51s. The bottom surface 51b extends substantially parallel (within ±5°) to the lower surface 51d and the upper surface 51u of the first part 511. The bottom surface 51b is a flat surface (linear shape in a cross-sectional view) here but may alternatively be a curved surface (curved shape in the cross-sectional view). The bottom surface 51b is not in contact with the caulking part 30c here. In another embodiment, however, the bottom surface 51b may be in contact with the caulking part 30c. The side surface 51s extends substantially vertically (within ±5°) along the center axis CL of the positive electrode terminal 30. In the step part 51g, at least a part of the caulking part 30c of the positive electrode terminal 30 is disposed (accommodated). The side surface 51s is preferably in contact with the caulking part 30c.

The size or shape of the step part 51g is preferably adjusted as appropriate in accordance with the material of the positive electrode terminal 30 (fluidity at melting) or the shape (length or the like) of the shaft part 30a, for example. Therefore, although not limited in particular, in some embodiments, a depth D1 of the step part 51g (the maximum length in the up-down direction Z, a vertical length from the lower surface 51d to the bottom surface 51b) is typically 0.1 to 2 mm, for example 0.2 to 1.5 mm, 0.3 to 1 mm, and moreover about 0.4 to 0.5 mm. In one example, the depth D1 of the step part 51g is 0.45 mm.

In addition, in some embodiments, a ratio (D1/T) of the depth D1 of the step part 51g to the thickness T (see FIG. 9) of the positive electrode first current collecting part 51 (specifically, the first part 511) is preferably 1/2 or less and more preferably 1/3 or less. Thus, a space S, which will be described below, can be secured easily even after the caulking process (in other words, at the welding bonding to form the welding bonding part J). In some embodiments, the ratio (D1/T) is preferably 1/20 or more, preferably 1/10 or more, more preferably 1/5 or more, and still more preferably 1/4 or more. This makes it easy to have the caulking part 30c and the step part 51g in contact with each other and improves the caulking strength or the conduction reliability, and mover can reduce the electric resistance. In one example, the ratio (D1/T) is 0.3 (= 0.45/1.5).

In this embodiment, a concave part (including a groove, a notch, or the like) 51r that is depressed to the upper surface 51u side (to the upper side in FIG. 8) is provided at the bottom surface 51b of the step part 51g. The provision of the concave part 51r can prevent the space S, which will be described below, from being closed at the caulking process, and can easily secure the space S, which will be described below, even after the caulking process (in other words, at the welding bonding to form the welding bonding part J).

The concave part 51r is provided in a vicinity of an outer peripheral edge of the bottom surface 51b of the step part 51g here. The concave part 51r is provided at a boundary portion between the bottom surface 51b and the side surface 51s here. The concave part 51r is preferably provided in the range of the length corresponding to 1/2 or less of a width W1 of the step part 51g from the outer peripheral edge on the bottom surface 51b, for example. The vicinity of the outer peripheral edge of the bottom surface 51b is the place where the wall of a tip end part of the shaft part 30a does not easily flow in the caulking step to be described below. Therefore, the concave part 51r is provided in the boundary portion, so that the space S to be described below can be easily secured even after the caulking process (in other words, at the welding bonding to form the welding bonding part J).

The size, shape, arrangement, and the like of the concave part 51r are preferably adjusted as appropriate in accordance with the material (fluidity at melting) of the positive electrode terminal 30 or the shape (length or the like) of the shaft part 30a, for example. Therefore, although not limited in particular, in some embodiments, a width W2 of the concave part 51r (the maximum length in the long side direction Y) is typically smaller than the width W1 of the step part 51g. A depth D2 of the concave part 51r (the maximum length in the up-down direction Z, the vertical length from the bottom surface 51b of the step part 51g to the end part of the concave part 51r on the upper surface 51u side) is typically 1 mm or less, for example 0.01 to 0.5 mm, 0.05 to 0.3 mm, and moreover about 0.1 to 0.2 mm. In one example, the depth D2 of the concave part 51r is 0.1 mm.

In some embodiments, moreover, the depth D2 of the concave part 51r is preferably smaller than the depth D1 of the step part 51g. A ratio (D2/D1) of the depth D2 of the concave part 51r to the depth D 1 of the step part 51g is preferably 1/2 or less, 1/3 or less, and more preferably 1/4 or less. This makes it easy to have the caulking part 30c and the step part 51g in contact with each other and improves the caulking strength or the conduction reliability, and mover can reduce the electric resistance. The ratio (D2/D1) is preferably 1/20 or more, more preferably 1/10 or more, and still more preferably 1/5 or more. Thus, the space S to be described below can be easily secured even after the caulking process (in other words, at the welding bonding to form the welding bonding part J). In one example, the ratio (D2/D1) is about 0.22 (= 0.1/0.45).

The concave part 51r here has a trapezoidal groove with an approximately trapezoidal shape in a cross-sectional view. The concave part 51r may have another shape such as an approximately semi-circular shape, a quadrangular shape, or a triangular shape in a cross-sectional view. The concave part 51r may be a round groove, an angular groove, a triangular groove, or the like. Although one concave part 51r is provided here, two or more concave parts 51r may be provided at the bottom surface 51b. In another embodiment, the concave part 51r can be provided at the side surface 51s or at each of the bottom surface 51b and the side surface 51s.

The concave part 51r is preferably provided axis-symmetrically about the center axis CL of the positive electrode terminal 30. Thus, for example, even if vibration, impact, or the like is applied in the use of the electrical energy storage device 100, the electrical connection between the positive electrode terminal 30 and the positive electrode current collecting part 50 can be maintained stably and the conduction reliability of the positive electrode terminal 30 can be improved. The concave part 51r is preferably provided continuously in a circumferential direction of the penetration hole 51h. In the plan view, at a periphery of the penetration hole 51h, it is preferable that the concave part 51r be provided to have a ring shape (for example, annular shape), a U-like shape, a C-like shape (half-ring shape), or the like and particularly preferable that the concave part 51r be provided to have a ring shape (for example, annular shape).

As illustrated in FIG. 7 and FIG. 8, the welding bonding part J is formed at a boundary portion between a peripheral part of the penetration hole 51h of the first part 511 and the caulking part 30c of the positive electrode terminal 30. By the provision of the welding bonding part J, the electrical connection between the positive electrode terminal 30 and the positive electrode current collecting part 50 can be stably maintained and the conduction reliability can be improved. The welding bonding part J is formed by, for example, laser welding, electron beam welding, ultrasonic welding, resistance welding, tungsten inert gas (TIG) welding, or the like.

The welding bonding part J is preferably provided axis-symmetrically about the center axis CL of the positive electrode terminal 30. Thus, for example, even if vibration, impact, or the like is applied in the use of the electrical energy storage device 100, the electrical connection between the positive electrode terminal 30 and the positive electrode current collecting part 50 can be maintained stably and the conduction reliability of the positive electrode terminal 30 can be improved. The welding bonding part J has a ring shape (for example, annular shape) here, and is provided along the entire periphery of the penetration hole 51h as illustrated in FIG. 6.

As illustrated in FIG. 8, the welding bonding part J is provided ranging from the lower surface 51d of the first part 511 to a part of the side surface 51s of the step part 51g here. It is preferable that the welding bonding part J be not provided at the concave part 51r. A depth D3 of the welding bonding part J (the maximum length in the up-down direction Z, the vertical length from the lower surface 5 1d of the first part 511 to the end part of the welding bonding part J on the upper surface 51u side) is preferably smaller than the depth D1 of the step part 51g. The depth D3 of the welding bonding part J is typically 0.15 mm or more, for example 0.15 to 0.5 mm, 0.3 to 0.4 mm, and moreover about 0.32 ±0.014 mm. In one example, the depth D3 of the welding bonding part J is 0.32 mm.

In some embodiments, a ratio (D3/D1) of the depth D3 of the welding bonding part J to the depth D1 of the step part 51g is preferably 2/3 or less and more preferably 1/2 or less. Thus, the space S to be described below can be easily secured even after the caulking process (in other words, at the welding bonding to form the welding bonding part J). The ratio (D3/D1) is preferably 1/5 or more, 1/4 or more, and more preferably 1/3 or more. In this case, the conduction reliability can be improved at a higher level.

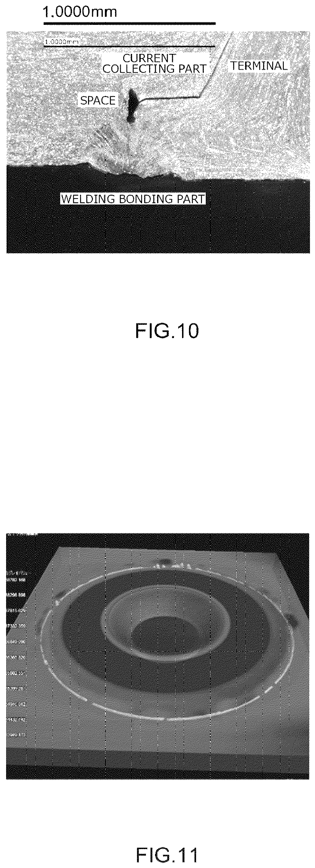

In the art disclosed herein, as illustrated in FIG. 7 and FIG. 8, the space S is provided between the first part 511 and the positive electrode terminal 30 in the vicinity of the welding bonding part J, typically in contact with the welding bonding part J. The provision of this space S indicates that the space to which gas escapes at the welding bonding to form the welding bonding part J has been secured. FIG. 10 is a cross-sectional SEM image in the vicinity of the welding bonding part J according to one example. When the space (gas escape area) is secured between the terminal and the current collecting part in the vicinity of the welding bonding part J in this manner, the occurrence of the welding defect such as a blowhole or pit in the welding bonding part J can be suppressed. Accordingly, the welding bonding part J with low resistance can be formed stably and the conduction reliability can be improved.

The size, shape, arrangement, and the like of the space S are not limited in particular. In some embodiments, it is preferable that the space S be provided at the place including the concave part 51r and more preferable that the space S be provided across the concave part 51r and a part of the step part 51g (typically, an upper end part). The height of the space S (the maximum length in the up-down direction Z) is typically smaller than the depth D1 of the step part 51g. The height of the space S may be smaller than the depth D3 of the welding bonding part J. The height of the space S is preferably larger than or equal to the depth D2 of the concave part 51r. The width of the space S (the maximum length in the long side direction Y) is typically smaller than the width W1 of the step part 51g. The width of the space S is preferably larger than or equal to the width W2 of the concave part 51r. The size of the space S being larger than or equal to the predetermined value can stably exert the effect of the art disclosed herein. The size of the space S being smaller than or equal to the predetermined value can reduce the electric resistance.

As illustrated in FIG. 10, the space S is preferably provided in the vicinity of the outer peripheral edge of the bottom surface 51b of the step part 51g. The space S is preferably provided at a boundary portion between the bottom surface 51b and the side surface 51s. The space S is preferably provided in the range of the length corresponding to 1/2 or less of the width W1 of the step part 51g from the outer peripheral edge on the bottom surface 51b, for example. In this part, an extra wall does not flow easily at the caulking process. Therefore, the space S can be secured stably. The presence or absence, shape, and position of the space S can be determined based on an X-ray CT image, for example. By using the X-ray CT image, the space S can be identified by being distinguished clearly from an internal damage such as a blowhole.

The space S is preferably provided axis-symmetrically about the center axis CL of the positive electrode terminal 30. Thus, for example, even if vibration, impact, or the like is applied in the use of the electrical energy storage device 100, the electrical connection between the positive electrode terminal 30 and the positive electrode current collecting part 50 can be maintained stably and the conduction reliability of the positive electrode terminal 30 can be improved. The space S is preferably provided continuously in the circumferential direction of the penetration hole 51h. Thus, the effect of the art disclosed herein can be exerted at the higher level and the occurrence of the welding damage can be reduced largely.

FIG. 11 is an X-ray CT image in the vicinity of the welding bonding part according to one example. In the plan view, at the periphery of the penetration hole 51h, it is preferable that the space S be provided to have a ring shape (for example, annular shape), a U-like shape, a C-like shape (semi-circular shape), or the like and particularly preferable that the space S be provided to have a ring shape (for example, annular shape) as illustrated in FIG. 11. That is to say, it is particularly preferable that the space S be provided continuously along the entire periphery of the penetration hole 51h.

As illustrated in FIG. 2, the positive electrode second current collecting part 52 extends along the short side wall 12c of the case main body 12. One end part of the positive electrode second current collecting part 52 (upper end part in FIG. 2) is electrically connected to the positive electrode first current collecting part 51 (specifically, second part 512 (see FIG. 6)). The other end part of the positive electrode second current collecting part 52 (lower end part in FIG. 2) is attached to the positive electrode tab group 23 and electrically connected to the plurality of positive electrode tabs 22t. The positive electrode second current collecting part 52 and the positive electrode tab group 23 are, for example, bonded by welding in a state where the plurality of positive electrode tabs 22t are overlapped on each other.

As illustrated in FIG. 7, the resin member 70 is an insulating member that is disposed between a lower surface (inner surface) of the sealing plate 14 and the first part 511 of the positive electrode first current collecting part 51. The resin member 70 has the resistance against the nonaqueous electrolyte solution to be used and the electrical insulating property, and is formed of a resin material capable of elastic deformation, for example, fluororesin such as perfluoro alkoxy fluorine resin (PFA), polyphenylene sulfide resin (PPS), or the like. As illustrated in FIG. 7 and FIG. 8, the resin member 70 includes a base part 70a and a plurality of protrusion parts 70b.

As illustrated in FIG. 7, the base part 70a is a part that prevents direct contact between the sealing plate 14 and the positive electrode first current collecting part 51. The base part 70a spreads horizontally along the inner surface of the sealing plate 14. The base part 70a includes a penetration hole 70h (see FIG. 9) penetrating in the up-down direction Z at a position corresponding to the terminal extraction hole 18 on the sealing plate 14. To the penetration hole 70h, the shaft part 30a of the positive electrode terminal 30 and the tubular part 90a of the gasket 90 are inserted. The protrusion part 70b protrudes toward the electrode body group 20 relative to the base part 70a. Here, the number of protrusion parts 70b is the same as the number of electrode bodies 20a, 20b, and 20c constituting the electrode body group 20. That is, the number is three.

As illustrated in FIG. 2, the negative electrode terminal 40 is electrically connected to the negative electrode 24 (specifically, the negative electrode tab group 25) of each of the electrode bodies 20a, 20b, and 20c through the negative electrode current collecting part 60 inside the battery case 10. The structure of the negative electrode terminal 40 may be similar to or different from that of the aforementioned positive electrode terminal 30. The negative electrode terminal 40 is electrically connected to the negative electrode first current collecting part 61 of the negative electrode current collecting part 60 by the caulking process (mechanical fastening) and welding bonding (metallurgical bonding), in a manner similar to the positive electrode terminal 30 here. The negative electrode terminal 40 extends from the inside to the outside of the sealing plate 14 through the terminal extraction hole 19 of the sealing plate 14. The negative electrode terminal 40 is provided symmetrically to the positive electrode terminal 30 and includes a flange part (reference sign is omitted), a shaft part 40a, and a caulking part 40c here.

The negative electrode terminal 40 is preferably made of a metal such as copper or a copper alloy. The negative electrode terminal 40 may be configured of two conductive members bonded together and integrated. In the negative electrode terminal 40, for example, the caulking part 40c or the shaft part 40a to be connected to the negative electrode current collecting part 60 may be formed of copper or a copper alloy, and the flange part protruding out of the battery case 10 (specifically, to the outer surface of the sealing plate 14) through the terminal extraction hole 19 may be formed of aluminum or an aluminum alloy.

The negative electrode current collecting part 60 constitutes a conductive path that electrically connects the negative electrode tab group 25 constituted by the plurality of negative electrode tabs 24t and the negative electrode terminal 40 as illustrated in FIG. 2. The negative electrode current collecting part 60 is an example of the current collecting part disclosed herein. The negative electrode current collecting part 60 may be formed of the same metal species as the negative electrode current collector 24c, for example, a conductive metal such as copper, a copper alloy, nickel, or stainless steel. The negative electrode current collecting part 60 here includes the negative electrode first current collecting part 61 and the negative electrode second current collecting part 62. Structures of the negative electrode first current collecting part 61 and the negative electrode second current collecting part 62 may be equal to the structures of the positive electrode first current collecting part 51 and the positive electrode second current collecting part 52 of the positive electrode current collecting part 50, respectively. As illustrated in FIG. 6, the negative electrode first current collecting part 61 is bonded by welding to the caulking part 40c of the negative electrode terminal 40. At a boundary portion between the negative electrode first current collecting part 61 and the caulking part 40c, the welding bonding part J is formed similarly to the positive electrode side.

### <Manufacturing method for sealing plate assembly>

The sealing plate assembly illustrated in FIG. 5 and FIG. 6 can be manufactured by fixing the positive electrode terminal 30, the positive electrode current collecting part 50 (specifically, positive electrode first current collecting part 51), the negative electrode terminal 40, and the negative electrode current collecting part 60 (specifically, negative electrode first current collecting part 61) to the sealing plate 14 in a state of being insulated from the sealing plate 14. Although not limited in particular, the sealing plate assembly can be manufactured by, for example, a manufacturing method including a current collecting part preparing step (step S1) of preparing the current collecting part, an assembling step (step S2) for the members, a caulking step (step S3) of forming the caulking part at one end part of the shaft part, and a welding bonding step (step S4) of forming the welding bonding part at the boundary portion between the caulking part and the current collecting part. Although the positive electrode side will be described in detail below, the negative electrode side may be similar to the positive electrode side. In this case, "positive electrode" can be replaced by "negative electrode" as appropriate. The manufacturing method disclosed herein may further include another step at an optional stage. For example, the caulking step may be followed by an inspecting step for the caulking part (for example, inspecting step for caulking diameter), and the welding bonding step may be performed only on the caulking part that satisfies a predetermined standard.

In the current collecting part preparing step (step S1), the positive electrode current collecting part 50 and the negative electrode current collecting part 60 are prepared. The positive electrode current collecting part 50 includes the first part 511 including the penetration hole 51h, the step part 51g, and the concave part 51r as described above. The first part 511 as described above can be manufactured by processing a plate-shaped metal plate. The penetration hole 51h can be formed by, for example, a drilling process using a conventionally known stripper. The step part 51g and the concave part 51r can be formed by, for example, a conventionally known pressing process. More specifically, for example, a mold with convex parts corresponding to the step part 51g and the concave part 51r is prepared and by holding the metal plate in the mold and plastically deforming the metal plate with a pressing machine, the step part 51g and the concave part 51r can be formed. Note that the negative electrode current collecting part 60 can be similarly manufactured.

In the assembling step (step S2), the positive electrode terminal 30, the positive electrode current collecting part 50, the negative electrode terminal 40, and the negative electrode current collecting part 60 are assembled to the sealing plate 14 typically in a state of being insulated from the sealing plate 14. As illustrated in FIG. 9, the positive electrode terminal 30 and the positive electrode current collecting part 50 are assembled in such a way that, for example, the flange part 30f of the positive electrode terminal 30 is disposed on the outer surface of the sealing plate 14 with the gasket 90 interposed therebetween and the positive electrode current collecting part 50 is disposed on the inner surface of the sealing plate 14 with the resin member 70 interposed therebetween. Specifically, the respective members are assembled in such a way that the shaft part 30a of the positive electrode terminal 30 before the caulking process is inserted sequentially to the tubular part 90a of the gasket 90, the terminal extraction hole 18 of the sealing plate 14, the penetration hole 70h of the resin member 70, and the penetration hole 51h of the first part 511 of the positive electrode current collecting part 50 so as to protrude downward relative to the lower surface 51d of the penetration hole 51h. Note that the negative electrode terminal 40 and the negative electrode current collecting part 60 are assembled to the sealing plate 14 similarly.

In the caulking step (step S3), the caulking part 30c is formed by deforming one end of the shaft part 30a of the positive electrode terminal 30 assembled to the sealing plate 14 by the caulking process (riveting). Specifically, for example, the lower surface 51d of the first part 511 is placed on a fixed die, and a compression force in the up-down direction Z is applied to the shaft part 30a from above the flange part 30f of the positive electrode terminal 30 using a compression punch. Thus, a tip end part of the shaft part 30a that protrudes downward relative to the lower surface 5 1d of the first part 511 is pressed against an inner surface of the penetration hole 51h of the positive electrode current collecting part 50, specifically the side surface 51s of the step part 51g. Then, the wall of the tip end part of the shaft part 30a moves upward along the step part 51g. Thus, spreading occurs in such a way that the tip end part of the shaft part 30a enters the step part 51g and accordingly, the caulking part 30c is formed. Through such a caulking process, the positive electrode terminal 30 and the positive electrode current collecting part 50 are fixed to the sealing plate 14 and the terminal extraction hole 18 is sealed. The caulking part 40c can be similarly formed in the negative electrode terminal 40 and the negative electrode terminal 40 and the negative electrode current collecting part 60 can be fixed to the sealing plate 14.

Note that, in this embodiment, the concave part 51r is formed in the current collecting part preparing step (step S 1); therefore, even if the amount of wall of the tip end part of the shaft part 30a that flows into the step part 51g largely changes due to variation in processing accuracy of the shaft part 30a, for example, the concave part 51r is not completely filled with the wall of the tip end part of the shaft part 30a and it is possible to prevent the space S between the positive electrode terminal 30 and the positive electrode current collecting part 50 from being closed. Therefore, the air passage can be stably secured at the welding bonding step (step S4) to be described below.

In the welding bonding step (step S4), the caulking part 30c is welded to the periphery of the penetration hole 51h of the positive electrode current collecting part 50. The welding is preferably performed along a caulking engagement line. Thus, the welding bonding part J is formed at the boundary portion between the positive electrode terminal 30 and the positive electrode current collecting part 50. The welding bonding part J is preferably formed along the entire periphery (in a ring shape) of the penetration hole 51h. The welding bonding part J can be formed by a conventionally known welding method such as laser welding, electron beam welding, ultrasonic welding, resistance welding, or tungsten inert gas (TIG) welding. Thus, the conduction reliability can be improved. Note that by welding the caulking part 40c similarly to the periphery of the penetration hole of the negative electrode current collecting part 60, the welding bonding part J can also be formed at the boundary portion between the negative electrode terminal 40 and the negative electrode current collecting part 60.

Although not limited in particular, in the case of employing the laser welding, the following conditions can be used in some embodiments.
Laser oscillator: manufactured by Trumpf
Laser output: 3300 W
Core diameter of laser: 200 µm
Spot diameter of laser: 460 µm
Optical magnification: 2.3 times
Focal point: just focus
Scanning method: galvano
Scanning speed: 550 mm/s
Assist gas (N₂ gas): 50 L/min

In this embodiment, in the welding bonding step, the caulking part 30c is not formed and the space S is secured in the vicinity of the place where the welding bonding part J is formed, for example, in the vicinity of the outer peripheral edge of the bottom surface 51b of the step part 51g. Thus, the gas generated at the welding can escape to the space S and the remaining of the gas in the welding bonding part J can be suppressed. Therefore, the robustness of the welding quality in the producing process can be drastically improved and the occurrence of the welding defect can be suppressed. Accordingly, the welding bonding part J with high strength can be formed stably and the conduction reliability can be improved. It is preferable that the space S be secured continuously along the entire periphery of the penetration hole 51h.

### <Manufacturing method for electrical energy storage device>

The electrical energy storage device 100 can be manufactured by, for example, a manufacturing method including preparing the sealing plate assembly, the electrode body group 20, the nonaqueous electrolyte solution, and the case main body 12 as described above, and the manufacturing method further includes an attaching step and a constructing step.

In the attaching step, the electrode body group 20 is attached to the sealing plate 14 to manufacture a united object (sealing plate assembly) of the sealing plate 14 and the electrode body group 20 as illustrated in FIG. 3. Specifically, the positive electrode second current collecting part 52 is attached to the positive electrode tab group 23 of each of the electrode bodies 20a, 20b, and 20c and the positive electrode second current collecting part 52 is bonded (for example, bonded by welding) to the positive electrode first current collecting part 51 of the sealing plate assembly. Thus, the positive electrode 22 of each of the electrode bodies 20a, 20b, and 20c is electrically connected to the positive electrode terminal 30. Similarly, the negative electrode second current collecting part 62 is attached to the negative electrode tab group 25 of each of the electrode bodies 20a, 20b, and 20c and the negative electrode second current collecting part 62 is bonded (for example, bonded by welding) to the negative electrode first current collecting part 61 of the sealing plate assembly. Thus, the negative electrode 24 of each of the electrode bodies 20a, 20b, and 20c is electrically connected to the negative electrode terminal 40. Thus, the sealing plate assembly and the electrode body group 20 are integrated.

As illustrated in FIG. 1 and FIG. 2, in the constructing step, the electrode body group 20 integrated with the sealing plate 14 is accommodated in the internal space of the case main body 12 and the case main body 12 and the sealing plate 14 are sealed. The sealing can be performed by, for example, welding such as laser welding. After that, the nonaqueous electrolyte solution is injected through the liquid injection hole 15 of the sealing plate 14 and by covering the liquid injection hole 15 with the sealing member 16, the electrical energy storage device 100 is sealed. In this manner, the electrical energy storage device 100 can be manufactured.

### <Application of electrical energy storage device>

The electrical energy storage device 100 can also be suitably used as a battery pack in which the plurality of electrical energy storage devices 100 are electrically connected to each other through a busbar. In this case, for example, the plurality of electrical energy devices 100 can be electrically connected to each other by disposing the conductive member such as a busbar between the positive electrode terminal 30 and the negative electrode terminal 40 of the adjacent electrical energy storage devices 100. The electrical energy storage device 100 can be used in various applications, and suitably used in the application that requires high bonding strength, such as a motive power source (electrical power source for driving) for a motor mounted on a vehicle such as a passenger car or a truck. Although the type of vehicles is not particularly limited, examples thereof may include a plug-in hybrid electric vehicle (PHEV), a hybrid electric vehicle (HEV), a battery electric vehicle (BEV), and the like.

Although some embodiments of the present disclosure have been described above, the above-described embodiments are merely examples. The present disclosure can be implemented in various other modes. The present disclosure can be implemented based on the contents disclosed in the present specification and the technical common sense in the relevant field. The techniques described in the scope of claims include those in which the embodiments exemplified above are variously modified and changed. For example, another modification can replace a part of the aforementioned embodiment or be added to the aforementioned embodiment. Additionally, the technical feature may be deleted as appropriate unless such a feature is described as an essential element.

As described above, the following items are given as specific aspects of the art disclosed herein.
Item 1: The electrical energy storage device including: the electrode body including the electrode; the case main body that includes the opening and accommodates the electrode body; the sealing plate that includes the terminal extraction hole and seals the opening of the case main body; the current collecting part that is electrically connected to the electrode inside the case main body and includes the penetration hole; the terminal that includes the shaft part inserted to the terminal extraction hole and the penetration hole and the caulking part provided at one end part of the shaft part on the side of the case main body and caulked to the periphery of the penetration hole; the step part that is provided at the side surface of the penetration hole of the current collecting part and has at least a part of the caulking part of the terminal disposed therein; and the welding bonding part between the peripheral part of the penetration hole of the current collecting part and the caulking part of the terminal, in which the space is provided between the current collecting part and the terminal in the vicinity of the welding bonding part.
Item 2: The electrical energy storage device according to Item 1, in which the welding bonding part is provided in the ring shape, and the space is provided continuously in the circumferential direction along the welding bonding part with the ring shape.
Item 3: The electrical energy storage device according to Item 1 or 2, in which the space is provided in the vicinity of the outer peripheral edge of the bottom surface of the step part.
Item 4: The electrical energy storage device according to any one of Items 1 to 3, in which the current collecting part includes the concave part in the vicinity of the outer peripheral edge of the bottom surface of the step part.
Item 5: The electrical energy storage device according to Item 4, in which the ratio (D2/D1) of the depth D2 of the concave part to the depth D1 of the step part is 1/10 or more.
Item 6: The electrical energy storage device according to any one of items 1 to 5, in which the depth D3 of the welding bonding part is smaller than the depth D1 of the step part (D3 < D1).
Item 7: The electrical energy storage device according to any one of items 1 to 6, in which the current collecting part is formed of aluminum or an aluminum alloy.
Item 8: The electrical energy storage device according to any one of items 1 to 7, in which the terminal is formed of aluminum or an aluminum alloy.
Item 9: The manufacturing method for an electrical energy storage device including the electrode body including the electrode, the case main body that includes the opening and accommodates the electrode body, the sealing plate that includes the terminal extraction hole and seals the opening of the case main body, the current collecting part that is electrically connected to the electrode inside the case main body and includes the penetration hole, the terminal that includes the shaft part inserted to the terminal extraction hole and the penetration hole and the caulking part provided at one end part of the shaft part on the side of the case main body and caulked to the periphery of the penetration hole, the step part that is provided at the side surface of the penetration hole of the current collecting part and has at least a part of the caulking part of the terminal disposed therein, and the welding bonding part between the peripheral part of the penetration hole of the current collecting part and the caulking part of the terminal, the manufacturing method including: the assembling step of inserting the shaft part of the terminal to the terminal extraction hole of the sealing plate and the penetration hole of the current collecting part, thereby assembling the terminal, the sealing plate, and the current collecting part; the caulking step of, after the assembling step, deforming one end of the shaft part of the terminal, thereby forming the caulking part; and the welding bonding step of, after the caulking step, welding the caulking part to the periphery of the penetration hole of the current collecting part, thereby forming the welding bonding part, in which in the welding bonding step, the space is provided between the current collecting part and the terminal in the vicinity of the welding bonding part.

### [Reference Signs List]

10 Battery case
12 Case main body
14 Sealing plate
18, 19 Terminal extraction hole
20a, 20b, 20c Electrode body
22 Positive electrode (electrode)
24 Negative electrode (electrode)
30 Positive electrode terminal (terminal)
30a Shaft part
30c Caulking part
40 Negative electrode terminal (terminal)
50 Positive electrode current collecting part (current collecting part)
511 First part
51g Step part
51h Penetration hole
51r Concave part
60 Negative electrode current collecting part (current collecting part)
100 Electrical energy storage device
J Welding bonding part
S Space

## Claims

1. An electrical energy storage device (100) comprising:
an electrode body (20a, 20b, 20c) including an electrode (22),
a case main body (12) that includes an opening (12h) and accommodates the electrode body (20a, 20b, 20c);
a sealing plate (14) that includes a terminal extraction hole (18) and seals the opening (12h) of the case main body (12);
a current collecting part (50) that is electrically connected to the electrode (22) inside the case main body (12) and includes a penetration hole (51h);
a terminal (30) that includes a shaft part (30a) inserted to the terminal extraction hole (18) and the penetration hole (51h) and a caulking part (30c) provided at one end part of the shaft part (30a) on a side of the case main body (12) and caulked to a periphery of the penetration hole (51h);
a step part (51g) that is provided at a side surface of the penetration hole (51h) of the current collecting part (50) and has at least a part of the caulking part (30c) of the terminal (30) disposed therein; and
a welding bonding part (J) between a peripheral part of the penetration hole (51h) of the current collecting part (50) and the caulking part (30c) of the terminal (30), wherein a space (S) is provided between the current collecting part (50) and the terminal (30) in a vicinity of the welding bonding part (J).

2. The electrical energy storage device (100) according to claim 1, wherein
the welding bonding part (J) is provided in a ring shape, and
the space (S) is provided continuously in a circumferential direction along the welding bonding part (J) with the ring shape.

3. The electrical energy storage device (100) according to claim 1 or 2, wherein the space (S) is provided in a vicinity of an outer peripheral edge of a bottom surface of the step part (51g).

4. The electrical energy storage device (100) according to any one of claims 1 to 3, wherein the current collecting part (50) includes a concave part in the vicinity of the outer peripheral edge of the bottom surface of the step part (51g).

5. The electrical energy storage device (100) according to claim 4, wherein a ratio (D2/D1) of a depth D2 to a bottom surface of the concave part to a depth D1 to the bottom surface of the step part (51g) is 1/10 or more.

6. The electrical energy storage device (100) according to any one of claims 1 to 5, wherein a depth D3 to a bottom surface of the welding bonding part (J) is smaller than the depth D1 to the bottom surface of the step part (51g) (D3 < D 1).

7. The electrical energy storage device (100) according to any one of claims 1 to 6, wherein the current collecting part (50) is formed of aluminum or an aluminum alloy.

8. The electrical energy storage device (100) according to any one of claims 1 to 7, wherein the terminal (30) is formed of aluminum or an aluminum alloy.

9. A manufacturing method for an electrical energy storage device (100) including an electrode body (20a, 20b, 20c) including an electrode (22), a case main body (12) that includes an opening (12h) and accommodates the electrode body (20a, 20b, 20c), a sealing plate (14) that includes a terminal extraction hole (18) and seals the opening (12h) of the case main body (12), a current collecting part (50) that is electrically connected to the electrode (22) inside the case main body (12) and includes a penetration hole (51h), a terminal (30) that includes a shaft part (30a) inserted to the terminal extraction hole (18) and the penetration hole (51h) and a caulking part (30c) provided at one end part of the shaft part (30a) on a side of the case main body (12) and caulked to a periphery of the penetration hole (51h), a step part (51g) that is provided at a side surface of the penetration hole (51h) of the current collecting part (50) and has at least a part of the caulking part (30c) of the terminal (30) disposed therein, and a welding bonding part (J) between a peripheral part of the penetration hole (51h) of the current collecting part (50) and the caulking part (30c) of the terminal (30), the manufacturing method comprising:
an assembling step of inserting the shaft part (30a) of the terminal (30) to the terminal extraction hole (18) of the sealing plate (14) and the penetration hole (51h) of the current collecting part (50), thereby assembling the terminal (30), the sealing plate (14), and the current collecting part (50);
a caulking step of, after the assembling step, deforming one end of the shaft part (30a) of the terminal (30), thereby forming the caulking part (30c); and
a welding bonding step of, after the caulking step, welding the caulking part (30c) to the periphery of the penetration hole (51h) of the current collecting part (50), thereby forming the welding bonding part (J), wherein in the welding bonding step, a space (S) is provided between the current collecting part (50) and the terminal (30) in a vicinity of the welding bonding part (J).
